# EUROPEAN PATENT SPECIFICATION

(11) **EP 1 563 218 B1**
(45) Date of publication and mention of the grant of the patent: **09.05.2007**
(21) Application number: 03809896.8
(22) Date of filing: 31.10.2003
(51) Int. Cl.: F16L 37/098, F16L 37/133, F16L 47/00

(54) **COUPLING MEMBER FOR USE IN A SYSTEM WITH FLOWING FLUID COMPRISING INTEGRAL LOCKING TONQUES FOR ENGAGING WITH E.G. AN ANNULAR GROOVE**
KUPPLUNGSGLIED ZUR VERWENDUNG IN EINEM SYSTEM MIT STRÖMENDEM FLUID MIT INTEGRALEN VERRIEGELUNGSZUNGEN ZUM EINGREIFEN IN ZUM BEISPIEL EINER RINGNUT
ELEMENT DE RACCORD DESTINE A ETRE UTILISE DANS UN SYSTEME A FLUIDE EN ECOULEMENT COMPRENANT DES PATES DE VERROUILLAGE SOLIDAIRES DESTINEES A VENIR EN PRISE AVEC, PAR EXEMPLE, UNE RAINURE ANNULAIRE

(30) Priority: 31.10.2002 NO 20025234
(43) Date of publication of application: 17.08.2005
(73) Proprietor: Kongsberg Automotive AS, 3601 Kongsberg (NO)
(72) Inventor: PEDERSEN, Egil, N-2830 Raufoss (NO)
(74) Representative: Park, Duncan Magnus
(86) International application number: PCT/NO2003/000366
(87) International publication number: WO 2004/040186

(56) References cited:
- DE-A1- 3 529 052
- FR-A1- 2 700 196
- US-A- 5 062 478
- US-A- 5 324 081

## Description

The present invention relates to a coupling part for use in a system for flowing fluid, comprising a male part to be sealingly mounted and retained in an adapted female part on another coupling part, the male and female parts being provided with at least one sealing element.

In known solutions for locking systems for male and female parts, the locking element often comprises a separat ring. The ring may be placed on either the male or the female part, while the other part comprises a locking groove. The ring is compressed or expanded when the male part is inserted into the female part, before it slips into place in the locking groove.

E.g. in pneumatic brake pipe arrangements in large vehicles, coupling parts with nipples for the pipes are used, the coupling parts being provided with male parts for connecting these to openings in female parts on another coupling part in a sealing manner. The nipples may have external circumferential grooves, onto which the pipes are pressed and retained in a sealing manner. Opposite of the nipples the coupling parts may have a male part with sealing elements and locking rings which are to retain the coupling parts in female parts having an internal groove for a locking ring. A common type of locking ring is a split ring, possibly with a chamfered external edge in order to facilitate insertion into the female part. As sealing elements are commonly used O-rings, which may be extended in order to be pulled onto the male parts and placed in the ring grooves in these, or which are inserted into the female parts and placed in the internal grooves therein.

Hence, the locking rings are separate parts, which are mounted on the male parts or in the female parts before these are connected together.

Coupling parts of this type have for a long time been produced from metal, in particular brass, and the production method has been turning. From price related reasons it has been desirable to produce coupling parts by injection moulding of plastic, in order to reduce the cost of materials and avoid finishing. Besides, it is desirable to avoid separate locking rings.

An improved prior art, i.e. not comprising a separate locking element and made of plastics, is known from DE-A-3529052 showing all of the features of the preamble of claim1.

One requirement for rational moulding is that the casting mould parts that are used, including a core which produces a throughgoing channel after the moulding, may be used for a large number of coupling parts, and hence, the coupling parts need to be able to be disengaged from the mould parts without the mould parts having to be destroyed. The coupling part may e.g. be moulded as a purely rotational element by use of a removable core and a two-part external mould.

By the present invention defined by claim 1 a coupling part has been provided, having a male part which makes it possible to mould the coupling part with integral locking tongues, in such a way that use of a separat locking ring is avoided, the free ends of the locking tongues are pointing oppositely of the direction of insertion for the male part into a female part. Each locking tongue has an outwardly directed hook at the free end, for engaging with an inner groove or a stepping in the female part.

The production is rational by not requiring production and assembling of separate locking rings. Besides, the danger of the locking rings being lost or missing or incorrectly put on is avoided.

During load, by internal pressure in the system of which the male part is a part, the locking tongues will be exposed to pressure load in the longitudinal direction.

For moulding of the coupling part comprising the male part, two or more external mould parts and a core may be used. The external mould parts may have a ribbed structure meeting the core and hence delimiting two or more locking tongues on the male part. When the mould parts are removed from the moulded male part, openings which delimit the locking tongues have been made in the male part.

Locking tongues made by openings as described above need to be directed towards the external mould parts. By use of a two-part external mould the locking tongues may be made in two sectors of the circumference of the male part. Locking tongues between these sectors may be produced by being connected to the remainder of the male part through two planar bridges which are mainly parallel to the inside of a respective locking tongue which is in radial distance outwardly of each bridge.

A coupling part according to the invention may have different types of transitions to other parts of the system. The end of the coupling part which is opposite of the male part may e.g. be integral with or mounted in a sleeve provided with external threads, it may be made as a nipple for mounting of a pipe, it may be made as a corresponding male part for insertion into another female part, and the coupling part may form a T-piece with three male parts according to the invention, for insertion into three female parts. There are no limitations with respect to the design of this end of the coupling part, except that flow-through is to be made possible.

The invention will be further explained in the following by means of an example of embodiment, with reference to the appended drawings.
- Fig. 1: shows an axial section through a coupling part according to the invention.
- Fig. 2: shows another axial section through the same coupling part according to the invention, at 90° to the first axial section.
- Fig. 3: shows an end view of the coupling part towards the end on which the male part is situated.

In the shown example the coupling part has a nipple 6 for mounting of a pipe on the end opposite of a male part 1. As mentioned, this end of the coupling part may be designed in many other ways.

The shown embodiment of the coupling part according to the invention comprises a male part 1 for insertion into an adapted female part and locking of the male part 1 in the female part. For such a locking the male part 1 has locking tongues 2, 3 pointing oppositely of the direction of insertion of the male part 1 into a female part, as the female part is assumed to have a corresponding groove or a stepping with which the locking tongues will engage.

The male part 1 also has grooves 10 for sealing elements, for bearing against an adapted surface inside the female part.

Besides, the male part 1 has in the shown embodiment a flange 8, which may cooperate with an adapted portion in the female part in order to center the coupling part therein.

A shoulder 9 on the male part 1 forms a stop surface for a pipe inserted onto the nipple 6. The nipple 6 is shown with circumferential ribs 7 for retaining the pipe.

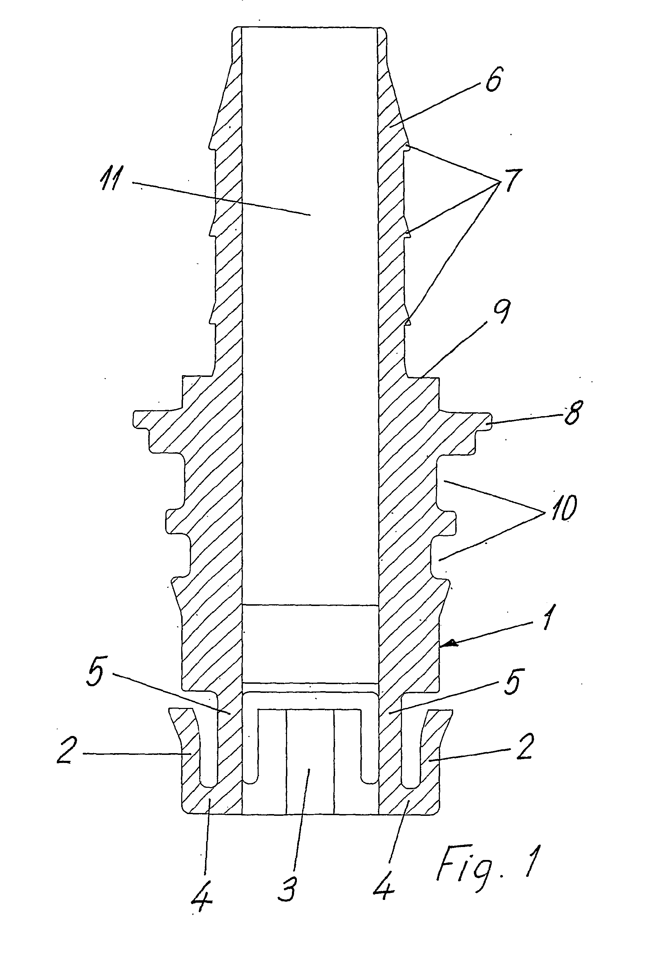

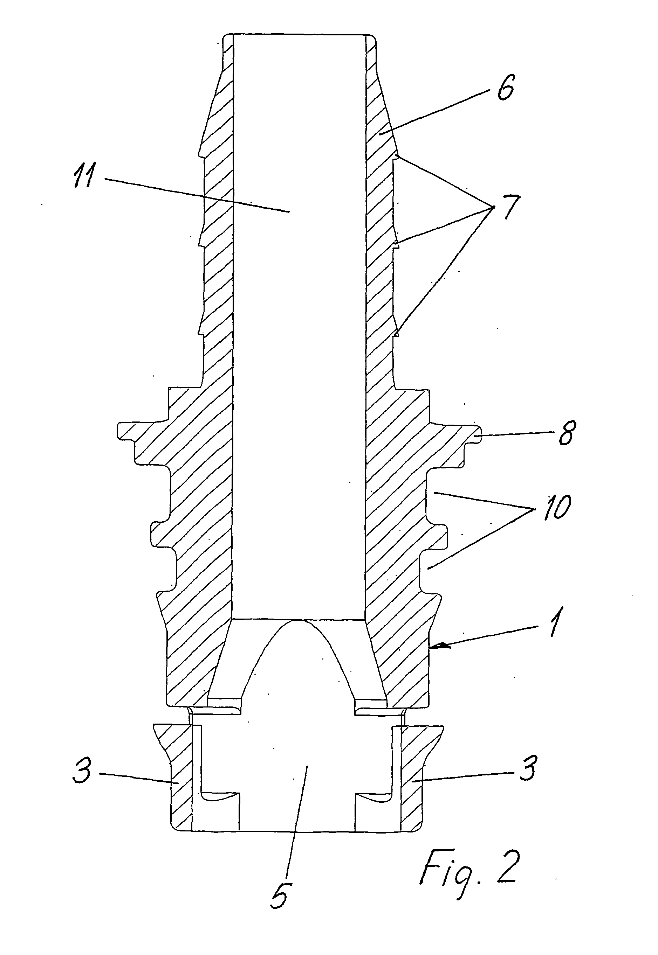

The shown embodiment of the coupling part may be moulded by use of a two-part external casting mould, i.e. a casting mould with two mould parts which may be moved radially to and from each other. The male part 1 has four locking tongues, two locking tongues 2 connected to a respective bridge portion 5 through wide portions of a ring 4, as it appears from Fig. 1, and two locking tongues 3 projecting directly from a respective narrower portion of the ring 4, as it appears from Fig. 2. The bridge portions 5 are planar and mutually parallel, and determines the direction of movement of the mould parts, which is perpendicular to the section plane in Fig. 1 and parallel to the section plane in Fig.2.

In the shown example each locking tongue 2, 3 is shown with an outward bend. Alternatively, each locking tongue 2, 3 may protrude slanting outwardly.

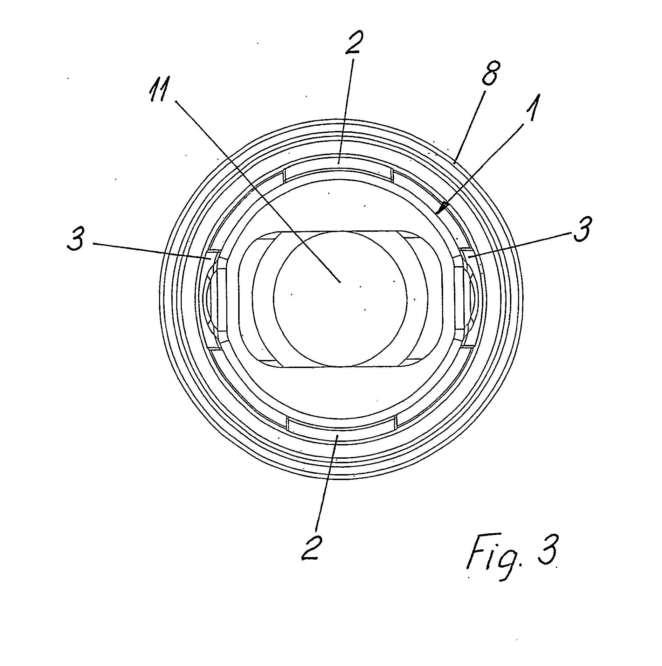

As it appears from Figs. 2 and 3, the flow-through channel 11 is designed so that it permits extracting of a mould core from the channel after the moulding. As it best appears from Fig. 3, the cross section of the channel in one end is approximately oval, which is due to the wide and narrow portions of the ring 4.

The most important is that the male part 1 has integral locking tongues 2, 3 pointing oppositely of the direction of insertion into a female part, whereby the locking tongues 2, 3 are pressure loaded due to the pressure in a fluid in the system. The coupling part may be made with more than four locking tongues 2, 3, and still be mouldable, by using more than two external mould parts, which e.g. may be moved radially in several directions.

The coupling part according to the invention may be moulded both of metal and plastic. Plastic is preferred from cost considerations.

In principle, the flowing fluid may be any liquid or gas.

## Claims

1. Coupling part for use in a system with flowing fluid, with an integral male part (1) to be sealingly mounted and retained upon axial insertion into an adapted female part on another coupling part, the female part having at least one internal annular groove or a step for locking the male part, the male part (1) having, for engaging with the annular groove or grooves, step or steps, integral locking tongues (2, 3) respectively, the free ends of the locking tongues are pointing oppositely of the direction of insertion of the male part (1) into the female part, and all the locking tongues are projecting slanting outwardly or have hooks projecting outwardly, all the locking tongues (2, 3) being integral with an end portion (4) of the male part (1), this end portion being connected to the remainder of the male part through two planar bridge portions (5) which are parallel to the inside of a respective locking tongue (2), which is situated in a radial distance outwardly from each bridge, **characterized in that** other locking tongues (3) are situated between the two said locking tongues (2), in the circumferential direction and integral with said end portion (4) whereby the use of a two-part external mould is made possible.

## Patentansprüche

1. Kupplungsteil zur Verwendung in einem System mit Strömungsflüssigkeit, mit einem integralen Steckerteil (1), das abdichtend auf einem axialen Einsatz in ein angepasstes Aufnahmeteil an einem anderen Kupplungsteil angebracht und gehaltert werden soll, wobei das Aufnahmeteil mindestens eine innenliegenden ringförmige Auskehlung oder eine Stufe aufweist, um das Steckerteil festzusetzen, wobei das Steckerteil (1) zum Einrasten mit der/den ringförmigen Auskehlung/en, Stufe/n, jeweils integrale Rastzungen (2, 3) besitzt, wobei die freien Enden der Rastzungen gegen die Einsteckrichtung des Steckerteils (1) in das Aufnahmeteil gerichtet sind und alle Rastzungen nach außen schrägstehend vorstehen oder nach außen vorstehende Haken haben, wobei alle Rastzungen (2, 3) integral mit einem Endabschnitt (4) des Steckerteils (1) sind, wobei dieser Endabschnitt mit dem Rest des Steckerteils über zwei ebene Brückenabschnitte (5) verbunden ist, die parallel zur Innenseite einer jeweiligen Rastzunge (2) sind, die sich in einem radialen Abstand außerhalb jeder Brücke befindet, **dadurch gekennzeichnet, dass** sich die anderen Zungen (3) zwischen den beiden Rastzungen (2) in der Umfangsrichtung befinden und mit dem Endabschnitt (4) integral sind, wodurch die Verwendung einer zweiteiligen Außenform ermöglicht wird.

## Revendications

1. Pièce de raccord destinée à être utilisée dans un système avec un fluide en écoulement, comprenant une pièce mâle venue de matière (1) devant être montée de manière étanche et retenue, lors de l'insertion axiale, dans une pièce femelle adaptée sur une autre pièce de raccord, la pièce femelle ayant au moins une rainure annulaire interne ou un étagement afin de verrouiller la pièce mâle, la pièce mâle (1) comportant, pour l'engagement avec la rainure ou les rainures annulaires, l'étagement ou les étagements, des pattes de verrouillage venues de matière(2, 3) respectivement, les extrémités libres des pattes de verrouillage étant orientées à l'opposé du sens d'insertion de la pièce mâle (1) dans la pièce femelle, et l'ensemble des pattes de verrouillage font saillie de manière inclinée vers l'extérieur ou comportent des crochets en saillie vers l'extérieur, l'ensemble des pattes de verrouillage (2, 3) étant venue de matière avec une portion d'extrémité (4) de la pièce mâle (1), cette portion d'extrémité étant raccordée au reste de la pièce mâle par l'intermédiaire de deux portions de traverse (5) planes, qui sont parallèles à l'intérieur d'une patte de verrouillage (2) respective, laquelle est située à une distance radiale vers l'extérieur à partir de chaque traverse,
**caractérisée en ce que** d'autres pattes de verrouillage (3) sont situées entre les deux dites pattes de verrouillage (2), dans la direction circonférentielle et venues de matière avec ladite portion d'extrémité (4), moyennant quoi l'utilisation d'un moule externe en deux parties est rendue possible.
